# EUROPEAN PATENT SPECIFICATION

(11) **EP 1 095 958 B1**
(45) Date of publication and mention of the grant of the patent: **08.02.2006**
(21) Application number: 00122922.8
(22) Date of filing: 21.10.2000
(51) Int. Cl.: C08G 77/02, C08G 77/12, C09D 183/05

(54) **Soluble silicone resin compositions**
Lösliche Siliconharzzusammensetzungen
Compositions solubles de résine à base de silicone

(30) Priority: 25.10.1999 US 425901; 13.12.1999 US 460102; 13.12.1999 US 459331; 25.10.1999 US 425306
(43) Date of publication of application: 02.05.2001
(73) Proprietor: DOW CORNING CORPORATION, Midland, Michigan 48686-0994 (US)
(72) Inventor: Zhong, Bianxiao, Midland Michigan 48640 (US); King, Russel Keith, Midland Michigan 48642 (US); Chung, Kyuha, Midland Michigan 48642 (US); Zhang, Shizhong, Midland Michigan 48642 (US)
(74) Representative: Sternagel, Fleischer, Godemeyer & Partner

(56) References cited:
- WO-A-98/47945
- US-A- 4 017 528
- US-A- 6 022 814

## Description

The present invention is soluble silicone resin compositions having good solution stability and a method for their preparation. The present silicone resins are useful to form microporous films having low dielectric constants.

Semiconductor devices often have one or more arrays of patterned interconnect levels that serve to electrically couple the individual circuit elements forming an integrated circuit (IC). These interconnect levels are typically separated by an insulating or dielectric film. Previously, a silicon oxide film formed using chemical vapor deposition (CVD) or plasma enhanced techniques (PECVD) was the most commonly used material for such dielectric films. However, as the size of circuit elements and the spaces between such elements decreases, the relatively high dielectric constant of such silicon oxide films is inadequate to provide adequate electrical insulation.

To provide a lower dielectric constant than that of silicon oxide, dielectric films formed from siloxane-based resins have found use. An example of such films are those formed from poly(hydrogen)silsesquioxane resins as described in U.S. Patents 3,615,272 and 4,756,977. While such films provide lower dielectric constants than CVD or PECVD silicon oxide films and also provide other benefits such as enhanced gap filling and surface planarization, typically the dielectric constants of such films are limited to approximately 3 or greater.

It is well known that the dielectric constant of the above discussed insulating films is an important factor where IC's with low power consumption, cross-talk, and signal delay are required. As IC dimensions continue to shrink, the dielectric constant increases in importance. As a result, siloxane based resin materials and methods for making such materials that can provide electrically insulating films with dielectric constants below 3 are desirable. In addition, it is desirable to have siloxane-based resins and methods for making such resins that provide low dielectric constant films which have a high resistance to cracking. Also, it is desirable for such siloxane-based resins to provide low dielectric constant films by standard processing techniques.

It is known that the dielectric constant of solid films decreases with a decrease in density of the film material. Therefore considerable work is being conducted to develop microporous insulating films for use on semiconductor devices.

U.S. Patent 5,494,859 describes a low dielectric constant insulating layer for an integrated circuit structure and a method of making the layer. A porous layer is formed by depositing on a structure a composite layer comprising an insulating matrix material and a material which can be converted to a gas upon subjection to a converting process. Release of the gas leaves behind a porous matrix of the insulating material which has a lower dielectric constant than the composite layer. The matrix forming material is typically silicon oxide and the material which can be converted to a gas upon subjection to a converting process is exemplified by carbon.

U.S. Patent 5,776,990 discloses an insulating foamed polymer having a pore size less than 100 nm made from a copolymer comprising a matrix polymer and a thermally decomposable polymer by heating the copolymer above the decomposition temperature of the decomposable polymer. The copolymers described are organic polymers that do not contain silicon atoms.

WO 98/49721 describes a process for forming a nanoporous dielectric coating on a substrate. The process comprises the steps of blending an alkoxysilane with a solvent composition and optional water; depositing the mixture onto a substrate while evaporating at least a portion of the solvent; placing the substrate in a sealed chamber and evacuating the chamber to a pressure below atmospheric pressure; exposing the substrate to water vapor at a pressure below atmospheric pressure and then exposing the substrate to base vapor.

Japanese Laid-Open Patent (HEI) 10-287746 teaches the preparation of porous films from siloxane-based resins having organic substituents which are oxidized at a temperature of 250°C. or higher. The useful organic substituents which can be oxidized at a temperature of 250°C. or higher given in this document include substituted and unsubstituted groups as exemplified by 3,3,3-trifluoropropyl, β-phenethyl group, t-butyl group, 2-cyanoethyl group, benzyl group and vinyl group.

Mikoshiba et al., J. Mat. Chem., 1999, 9, 591-598, report a method to fabricate angstrom size pores in poly(methylsilsesquioxane)-films in order to decrease the density and the dielectric constant of the films. Copolymers bearing methyl(trisiloxysilyl) units and alkyl(trisiloxysilyl) units are spin-coated on to a substrate and heated at 250°C. to provide rigid siloxane matrices. The films are then heated at 450°C. to 500°C. to remove thermally labile groups and holes are left corresponding to the size of the substituents. Trifluoropropyl, cyanoethyl, phenylethyl and propyl groups were investigated as the thermally labile substituents.

WO 98/47945 teach a method for reacting trichlorosilane and organotrichlorosilane to form organohydridosiloxane polymer having a cage conformation and between approximately 0.1 to 40 mole percent carbon-containing substituents. Resins formed from the polymers are reported to have a dielectric constant of less than 3.

The objectives of the present invention include providing silicone resins which are soluble in organic solvents such as toluene, have a useable solution shelf-life, and which are suitable for forming crack-free electrically insulating films on electronic devices. Another objective is to provide a silicone resin compositions which, after coating on a substrate, can be heated to form a microporous film having a narrow pore size distribution and a low dielectric constant. Said low-dielectric constant films can be formed on electrical components such as semiconductor devices by conventional methods to form microporous crack-free films having a dielectric constant less than 2.

The present invention refers to soluble silicone resin compositions having good solution stability and a method for their preparation. The present silicone resins are useful to form microporous films having low dielectric constants.

One embodiment of the present invention is a silicone resin which is soluble in standard solvents useful for applying dielectric coatings to electrical components. The silicone resin comprises the reaction product of a mixture comprising (A) 15-70 mol% of a tetraalkoxysilane described by formula Si(OR¹)₄ (1) where each R¹ is an independently selected alkyl group comprising 1 to 6 carbon atoms, (B) 12 to 60 mol% of a hydrosilane described by formula HSiX₃ (2) where each X is an independently selected hydrolyzable substituent, (C) 15 to 70 mole percent of an organotrialkoxysilane described by formula R²Si(OR³)₃ (3) where R² is a hydrocarbon group comprising 8 to 24 carbon atoms or a substituted hydrocarbon group comprising a hydrocarbon chain having 8 to 24 carbon atoms and each R³ is an independently selected alkyl group comprising 1 to 6 carbon atoms, whereby the mole percentages are based upon the total moles of components (A) + (B) + (C); in the presence of (D) water, (E) hydrolysis catalyst, and (F) organic solvent for the reaction product.

Component (A) is a tetraalkoxysilane as described by formula (1). The present inventors have unexpectedly discovered that the presence of component (A) in the range of 15 mol% to 70 mol%, based upon the total moles of components (A) + (B) + (C) is critical to the solubility and stability of the silicone resin in organic solvents. If the mol% of component (A) is outside the described range, the silicone resin will be at least partially insoluble in typical organic solvents used to form solutions of such resins for applications as coatings. It is preferred that the mol% of component (A) be within a range of 25 mol% to 50 mol%. In formula (1), each R¹ is an independently selected alkyl group comprising 1 to 6 carbon atoms. R¹ is, for example, methyl, ethyl, butyl, tert-butyl and hexyl. It is preferred that component (A) be tetramethoxysilane or tetraethoxysilane because of their easy availability.

Component (B) is a hydrosilane described by formula (2). Component (B) is added to the mixture in an amount of 12 mol% to 60 mol% based upon the total moles of components (A) + (B) + (C). Addition of component (B) in an amount outside the described range can limit the solubility of the resulting silicone resin in organic solvents. It is preferred that component (B) be added to the mixture in an amount of 15 mol% to 40 mol%. In formula (2), X is a hydrolyzable substituent. X is any substituent capable of hydrolyzing from the silicon atom in the presence of water under conditions of the described process and which groups when hydrolyzed do not adversely impact the solubility or end use of the silicone resin. Examples of hydrolyzable substituents include halogen, alkoxy groups, and acyloxy groups. Preferred is when X is an alkoxy group comprising 1 to 6 carbon atoms. Component (B) is, for example, trichlorosilane, trimethoxysilane or triethoxysilane with trimethyoxysilane and triethoxysilane being preferred.

Component (C) is an organotrialkoxysilane described by formula (3). Component (C) is added to the mixture in an amount of 15 mol% to 70 mol% based upon the total moles of components (A) + (B) + (C). Component (C) is important to providing a mechanism for providing microporosity to films formed from the silicone resin. Specifically, Component (C) comprises an unsubstituted or substituted hydrocarbon group, R², which can be removed from the silicon atom by thermolysis during a heating process thereby creating micropores in the resulting silicone resin coating. Therefore, the amount of component (C) added to the mixture is used to control the degree of porosity of the resulting silicone resin after heating to cure and remove the R² substituents by thermolysis. Generally, an amount of component (C) below 15 mol% will result in silicone resin coatings having a porosity too little to impart optimal dielectric properties to the material and poor solubility in solvent, while an amount of component (C) above 70 mol% will result in a resin which may have limited solubility in organic solvents and inadequate physical properties such as crack resistance when used as a porous coating on a substrate. Preferred is when component (C) is added to the mixture in a range of 15 mol% to 40 mol%.

In formula (3), R² is a hydrocarbon group comprising 8 to 24 carbon atoms or a substituted hydrocarbon group comprising a hydrocarbon chain having 8 to 24 carbon atoms. R² can be a linear, branched or cyclic hydrocarbon group. The substituted hydrocarbon group is substituted with halogen, poly(oxyalkylene) groups described by formula -(O-(CH₂)ₘ)ₓ-CH₃ where m and x are both positive integers and preferably a positive integer of 1 to 6, alkoxy, acyloxy, acyl, alkoxycarbonyl and trialkylsiloxy groups. Preferred is when R² is a linear alkyl group comprising 8 to 24 carbon atoms. Even more preferred is when R² is a straight chained alkyl group comprising 16 to 20 carbon atoms. Examples of R² include octyl, chlorooctyl, trimethylsiloxyoctyl, methoxyoctyl, ethoxyoctyl, nonyl, decyl, dodecyl, hexadecyl, trimethylsiloxyhexadecyl, octadecyl and docosyl.

In formula (3), each R³ is an independently selected alkyl group comprising 1 to 6 carbon atoms. R³ is, for example, methyl, ethyl, propyl, isopropyl, butyl, heptyl and hexyl. Preferred is when R³ is either methyl or ethyl.

Specific examples of organotrialkoxysilanes represented by formula (3) include octyltriethoxysilane, octyltrimethoxysilane, octadecyltrimethoxysilane, hexadecyltrimethoxysilane and dodecyltriethoxysilane. Preferred is when the organotrialkoxysilane is selected from the group consisting of octyltriethoxysilane, octadecyltrimethoxysilane and hexadecyltrimethoxysilane. Further examples of organotrialkoxysilanes include those described by the following formulas:

(CH₃(CH₂)₁₇-O-CH₂CH₂)Si(OMe)₃,

(CH₃(CH₂)₆C(=O)-(CH₂)₈CH₂)Si(OMe)₃,

(CH₃(CH₂)₁₇-O-C(=O)-CH₂CH₂)Si(OMe)₃

and

(CH₃(CH₂)₁₆-C(=O)-O-CH₂CH₂)Si(OMe)₃,

where Me is methyl.

Component (D) is water. It is preferred that component (D) be added in an amount sufficient to effect essentially complete hydrolysis of hydrolyzable groups bonded to the silicon atoms of components (A), (B) and (C) without an excess so great as to cause a two-phase mixture, which can slow down the reaction. Generally, it is preferred that the amount of water added be 1.4 to 6 moles per mole of components (A), (B) and (C). Even more preferred is when the water is added in an amount of 2.5 to 4.5 moles, on the same basis.

Component (E) is a hydrolysis catalyst and can be any of those organic or inorganic acids and bases known in the art to catalyze the hydrolysis of substituents from silicon atoms in the present of water. The hydrolysis catalyst can be an inorganic base such as potassium hydroxide or sodium hydroxide. The hydrolysis catalyst can be an inorganic acid such as hydrogen chloride, sulfuric acid and nitric acid. The hydrolysis catalyst can be added separately to the reaction mixture or, in the case where component (B) is a trihalosilane, may be at least partially generated in situ. A preferred hydrolysis catalyst is hydrogen chloride, at least a portion of which may be generated in situ when component (B) is trichlorosilane.

The amount of hydrolysis catalyst (catalytic amount) added to the reaction mixture can be any amount that facilitates the hydrolysis of the silicon-bonded hydrolytic groups of components (A), (B) and (C) and the optimal amount will depend upon the chemical composition of the catalyst as well as the temperature at which the hydrolysis reaction occurs. Generally, the amount of hydrolysis catalyst is within a range of 0.02 to 0.5 mole per mole of components (A), (B) and (C). Preferred is when the amount of hydrolysis catalyst is 0.1 to 0.3 mole on the same basis.

Component (F) is an organic solvent for the reaction product. Component (F) can be any organic solvent or mixture of organic solvents in which the reaction product forms a homogeneous solution. Examples of useful solvents include ketones such as methylisobutylketone and aromatic hydrocarbon solvents such as toluene, xylene, mesitylene, isobutyl isobutyrate, benzotrifluoride, propylbenzene, isobutyl propionate, propyl butyrate, parachlorobenzotrifluoride and n-octane. The amount of organic solvent is any amount sufficient to effect a homogeneous solution of the reaction product. In general it is preferred that the organic solvent comprises 70 to 95 weight percent of the total weight of components (A) thru (F), and preferably 85 to 95 weight percent.

In a preferred process for making the reaction product comprising the silicone resin, components (A), (B), (C) and (F) are combined to form a first mixture. Then components (D) and (E) are added, either separately or as a mixture, to the first mixture along with mixing to effect formation of the reaction product. The formation of the reaction product is effected at any temperature within a range of 15°C. to 100°C., with ambient temperature being preferred. In the preferred process after the resulting reaction is completed, volatiles are removed from the reaction product under reduced pressure to isolate a resin solution. Such volatiles include alcohol by-products, excess water, catalyst and solvents. If desired, all solvent can be removed from the resin solution to form a solid resin. When removing all solvents to isolate a solid resin, the temperature of the resin solution should be maintained below 60°C. and preferably within a range of 30°C. to 50°C. Excess heat can lead to the formation of insoluble resins. If desired the catalyst and alcoholic by-products may be separated from the reaction product by washing with one or more washes of water with interim phase separation to recover a solution of the silicone resin in solvent.

The silicone resin comprising the reaction product as described above contains Si-OH functionality and may contain Si-OR³ functionality, where R³ is as previously described. It is preferred that the silicone resin comprise 10 to 30 mol% of SiOH and 0 to 10 mol% Si-OR³.

A further embodiment of the present invention is a method to increase the molecular weight of and improve the storage stability of the reaction product comprising the silicone resin prepared as described above (hereafter referred to as the "bodying method"). The bodying method comprises (i) forming a solution of the silicone resin in an organic solvent at 10 to 60 weight percent in the presence of an optional condensation catalyst, (ii) heating the solution at a temperature sufficient to effect condensation of the silicone resin to a weight average molecular weight of 100,000 to 400,000, and (iii) neutralizing the solvent solution of silicone resin. It is preferred that in step (i) of this method, the silicone resin be present at 20 to 30 weight percent in the organic solvent. The organic solvent can be any of those organic solvents described above. The optional condensation catalyst added in step (i) is any of those acid and bases described above as hydrolyis catalysts for forming the reaction product. A preferred condensation catalyst is hydrogen chloride at a concentration of 5 to 200 weight parts HCl per 1,000,000 parts of resin solid. More preferred is when the condensation catalyst is hydrogen chloride at a concentration of 10 to 50 weight parts HCl per 1,000,000 parts of resin solid.

The temperature at which the solution of silicone resin is heated in step (ii) is from 50°C. up to the reflux temperature of the solution. In a preferred method, the solution of silicone resin is refluxed to effect the increase in weight average molecular weight. In step (ii), it is preferred that the solution be heated such that the silicone resin after heating has a weight average molecular weight of 150,000 to 250,000. In step (iii) of the method, the solvent solution of silicone resin is neutralized. Neutralization is effected by washing the solution with one or more portions of water, or by removing the solvent under reduced pressure and redissolving the silicone resin in one or more portions of an organic solvent. The organic solvent used for the neutralization step is any of the organic solvents described above.

The solution stability of the neutralized silicone resin is further improved by dissolving the silicone resin in an organic solvent or organic solvent mixture and adding 0.05 to 0.4 weight percent water, based upon the total weight of silicone resin, solvent and water. Preferred is adding 0.1 to 0.25 weight percent water on the same basis. The organic solvent is any of those organic solvents or mixtures thereof described above, with isobutyl isobutyrate being a preferred solvent.

The present silicone resins are particularly useful as low dielectric constant films on electronic devices such as integrated chips but may also be used for example as packing in chromotography columns. The silicone resins are cured and heated to be made porous by thermolysis of carbon-carbon bonds. Thus the further embodiments of the present invention refer to porous silicon resins and porous silicon resin films and to methods of making them.

Specifically, one further embodiment of the present invention refers to a method for forming a nanoporous silicone resin. By the term "nanoporous", it is meant a silicone resin having pores less than 20 nm in diameter. A preferred embodiment of the present invention is an electronic substrate containing a nanoporous coating of the silicone resin. In the preferred embodiment of the invention, the nanoporous coating has a pore diameter of 0.3 nm to 2 nm. The reaction product comprising the silicone resin, if a solid, is dissolved and diluted in an organic solvent as described above, with isobutyl isobutyrate and mesitylene being preferred solvents for forming coating solutions. The concentration of silicone resin in the organic solvent is not particularly critical to the present invention and is any concentration at which the silicone resin is soluble and which provides for acceptable flow properties for the solution in the coating process. Generally, a concentration of silicone resin in the organic solvent of 10 to 25 weight percent is preferred. The silicone resin is coated on the substrate by standard processes for forming coatings on electronic components such as spin coating, flow coating, dip coating and spray coating. The substrate having the silicone resin coating is then heated in preferably an inert atmosphere at a temperature sufficient to effect curing of the silicone resin coating and thermolysis of R² groups from silicon atoms. The heating may be conducted as a single-step process or as a two-step process. In the two-step process the silicon resin is first heated in preferably an inert atmosphere at a temperature sufficient to effect curing without significant thermolysis of R² groups from silicon atoms. Generally, this temperature is from 20°C. to 350°C. Then, the cured silicone resin is further heated at a temperature of greater than 350°C. up to the lessor of the decomposition temperature of the silicone resin polymer backbone or that which causes undesirable effects on the substrate to effect thermolysis of the R² groups from the silicon atoms. Generally, it is preferred that the thermolysis step be conducted at a temperature of greater than 350°C. to 600°C., with a temperature of 400°C. to 550°C. being most preferred. In the single-step process, the curing of the silicone resin and thermolysis of R² groups from silicon atoms are effected simultaneously by heating the substrate having the silicone resin to a temperature of greater than 350°C. up to the lessor of the decomposition temperature of the silicon polymer backbone or that which causes undesirable effects on the substrate. Generally, it is preferred that the single-step method of heating be conducted at a temperature of greater than 350°C. to 600°C., with a temperature of 400°C. to 550°C. being most preferred.

The method for forming the nanoporous coating on a substrate, either the one-step or two-step heating process, is preferably conducted in an inert atmosphere. The inert atmosphere is desirable because the presence of oxygen may oxidize Si-H bonds and cause an increase of residual silanol levels in the films resulting in an increased dielectric constant for the silicone resin. However, if desired a minor amount of oxidizing agent such as oxygen may be present in the atomosphere to tailor properties of the resulting nanoporous silicone resin. The inert atmosphere is any of those known in the art, for example, argon, helium or nitrogen.

The nanoporous silicone resins formed by the described method are particularly useful as low dielectric constant films on electronic devices such as integrated chips. The nanoporous silicone resin coatings prepared by the present method preferably have a dielectric constant less than 2. Such nanoporous silicone resins may also be made in particulate form by standard methods such as spray drying and heating as described above to make nanoporous and used in such applications as packing in chromatography columns and other such applications where porous materials are used.

The following examples are provided to illustrate the present invention. In the examples all parts are expressed as weight parts and mol% is based on the total moles of components (A)+(B)+(C) as described below. Molecular weight is reported as weight average molecular weight (Mw) as determined by gel permeation chromatography (GPC) using a toluene mobile phase and calibrated to polystyrene standards.

### Example 1 - Samples 1-1 through 1-14

Silicone resins were prepared by combining in a glass container components (A), (B), (C) and (F) as described below in the amounts described in Table 1:
(A) tetraethoxysilane, (B) triethoxysilane, (C) octadecyltrimethoxysilane and (F) mixture of methyl isobutyl ketone (MIBK) and toluene (85:15 weight ratio).

To this mixture was added a mixture of (D) water and (E) hydrogen chloride in the amounts described in Table 1. In samples 1-1 through 1-14 the weight part of component (C) was 1. The resulting reaction product was stripped of volatiles under reduced pressure at 60°C. The solubility of the resulting solid silicone resin was tested for toluene solubility by adding 8.3 g of toluene to 1.7 g of the solid silicone resin 24 hours after stripping was completed. The solid was considered soluble in the toluene if a clear solution was formed and no particles or gels where visually observed. The toluene solubility is also reported in Table 1. The data presented in Table 1 demonstrate the importance of the mol% of components (A) and (B) on solubility of the silicone resin.

**Table 1 The Effect of mol % of Components (A) and (B) on Silicone Resin Solubility in Toluene**

| Sample | Wt. Parts | | | | | mol% | | Toluene |
|---|---|---|---|---|---|---|---|---|
| No. | (A) | (B) | (D) | (E) | (F) | (A) | (B) | Soluble |
| 1-1 | 0.56 | 1.32 | 0.84 | 0.078 | 12.0 | 20 | 60 | yes |
| 1-2 | 0.70 | 1.21 | 0.86 | 0.079 | 12.1 | 25 | 55 | yes |
| 1-3 | 0.84 | 1.10 | 0.87 | 0.080 | 12.2 | 30 | 50 | yes |
| 1-4 | 0.97 | 0.98 | 0.88 | 0.081 | 12.2 | 35 | 45 | yes |
| 1-5 | 1.11 | 0.88 | 0.90 | 0.082 | 12.3 | 40 | 40 | yes |
| 1-6 | 1.25 | 0.77 | 0.91 | 0.084 | 12.4 | 45 | 35 | yes |
| 1-7 | 1.39 | 0.66 | 0.92 | 0.085 | 12.5 | 50 | 30 | yes |
| 1-8 | 1.67 | 0.44 | 0.95 | 0.087 | 12.6 | 60 | 20 | yes |
| 1-9 | 1.81 | 0.33 | 0.96 | 0.088 | 12.7 | 65 | 15 | yes |
| 1-10* | 0.00 | 1.75 | 0.79 | 0.073 | 11.7 | 0 | 80 | no |
| 1-11* | 0.28 | 1.53 | 0.82 | 0.075 | 11.9 | 10 | 70 | no |
| 1-12* | 0.42 | 1.42 | 0.83 | 0.076 | 12.0 | 15 | 65 | no |
| 1-13* | 1.95 | 0.22 | 0.98 | 0.490 | 12.8 | 70 | 10 | no |
| 1-14* | 2.22 | 0.00 | 1.00 | 0.092 | 12.9 | 80 | 0 | no |

| | | | | | | | | |
|---|---|---|---|---|---|---|---|---|
| * not an example of the present invention | | | | | | | | |

The resins described as Samples 1-3 were further analyzed by Si²⁹ and C¹³ NMR and determined to to have 25 mol% SiOH and 5 mol% SiOR³, where R³ is methyl or ethyl.

### Example 2

Samples 2-1 through 2-6 were prepared the same as the samples described in Example 1 with the following exceptions. The mol% of component (A) was held constant at 30 mol% (1 weight part). The amounts of each of the other components as described in Example 1 are presented in Table 2 along with the toluene solubility of the resulting silicone resin.

**Table 2 Effect of mol % of Component (C) on Silicone Resin Solubility in Toluene**

| Sample | Wt. Parts | | | | | mol% | | Toluene |
|---|---|---|---|---|---|---|---|---|
| No. | (B) | (C) | (D) | (E) | (F) | (B) | (C) | Soluble |
| 2-1 | 1.05 | 1.80 | 1.047 | 0.0960 | 18.8 | 40 | 30 | yes |
| 2-2 | 1.16 | 1.56 | 1.045 | 0.0959 | 17.1 | 44 | 26 | yes |
| 2-3 | 1.29 | 1.26 | 1.046 | 0.0959 | 15.0 | 49 | 21 | yes |
| 2-4 | 1.42 | 0.96 | 1.046 | 0.0959 | 13.0 | 54 | 16 | yes |
| 2-5* | 1.50 | 0.78 | 1.045 | 0.0958 | 11.7 | 57 | 13 | no |
| 2-6* | 1.58 | 0.60 | 1.046 | 0.0959 | 10.5 | 60 | 10 | no |

| | | | | | | | | |
|---|---|---|---|---|---|---|---|---|
| * not an example of the present invention | | | | | | | | |

### Example 3

Samples 3-1 through 3-3 were prepared according to the method described in Example 1 with Component (C) being either (C-1) hexadecyltrimethoxysilane or (C-2) octyltriethoxysilane as indicated in Table 3. The amount of each of the components (weight parts per weight part of (A)) along with the toluene solubility of the resulting resin in provided in Table 3.

**Table 3**

| Sample | | Wt. Parts | | | | | mol% | | | Toluene |
|---|---|---|---|---|---|---|---|---|---|---|
| No. | (C)type | (B) | (C) | (D) | (E) | (F) | (A) | (B) | (C) | Soluble |
| 3-1 | C-1 | 0.99 | 1.80 | 1.05 | 0.096 | 20.13 | 30 | 37.5 | 32.5 | yes |
| 3-2 | C-2 | 0.92 | 1.55 | 1.05 | 0.10 | 13.73 | 30 | 35 | 35 | yes |
| 3-3 | C-2 | 0.63 | 2.92 | 1.24 | 0.11 | 21.88 | 25 | 20 | 55 | yes |

### Example 4

Preparation of silicone resin using in situ formed hydrogen chloride as hydrolysis catalyst. A silicone resin was formed in a process similar to that described in Example 1 by combining (A) 1 part of tetraethoxysilane, (B) 1.08 parts of trichlorosilane, (C) 1.19 parts of octadecyltrimethoxysilane, (D) 1.03 parts of water and (F) 14.87 parts of a mixture of MIBK with toluene (85:15 weight ratio). The mixture was refluxed for 5 minutes and volatiles where removed at 40°C. under vacuum. The resulting silicone resin was soluble in toluene as tested by the method described in Example 1.

### Example 5

Effects of heating and hydrocarbon substitution on weight average molecular weights of silicone resins. Samples 5-1 through 5-6 were prepared by a process similar to that described in Example 1. Component (C) was either (C-1) octadecyltrimethoxysilane or (C-2) octyltriethoxysilane as indicated in Table 4. The mol% of component (C) and components (A) and (B), as described in Example 1, are provided in Table 4. The amounts of components (D) and (E) where the same as described in Example 1. The silicone resin was recovered as a solid by removing volatiles at 30°C. under vacuum. The solid silicone resin was dissolved to 30 weight percent in toluene and heated under reflux, with continuous removal of evolved water, for the times described in Table 4. The weight average molecular weights of the silicone resins were determined before and after heating by GPC and the results are reported in Table 4. The toluene solubility of the silicone resins was determined as described in Example 1, and all resins both before and after heat treatment were toluene soluble.

**Table 4 Mw Silicone Resins Before and After Heat Treatment**

| Sample | | mol% | | | Time | Mw | |
|---|---|---|---|---|---|---|---|
| No. | Type (C) | (A) | (B) | (C) | (h) | Pre-heat | Heated |
| 5-1 | C-1 | 30 | 47 | 23 | 1 | 12,700 | 55,000 |
| 5-2 | C-1 | 30 | 47 | 23 | 2 | 12,700 | 91,500 |
| 5-3 | C-1 | 30 | 47 | 23 | 3 | 12,700 | 139,400 |
| 5-4 | C-1 | 30 | 49 | 21 | 1 | 11,600 | 81,500 |
| 5-5 | C-2 | 30 | 30 | 40 | 1 | 5,240 | 23,800 |
| 5-6 | C-2 | 30 | 25 | 45 | 1 | 7,540 | 16,300 |

### Example 6

A soluble silicone resin was formed by the method of Example 1, a sample heated to make porous and porosity determined, and a sample coated on a substrate and physical characteristics of the coating on the substrate determined. The soluble silicone resin was formed by addition of the components in the amount described in Table 5.

**Table 5**

| Component | Description | Wt. Parts | mol% |
|---|---|---|---|
| (A) | Tetraethoxysilane | 1 | 30 |
| (B) | Triethoxysilane | 1.31 | 50 |
| (C) | Octadecyltrimethoxysilane | 1.20 | 20 |
| (D) | Water | 0.57 | - |
| (E) | Hydrogen Chloride | 0.096 | - |
| (F) | Mixture of MIBK and Toluene | 15.8 | - |
| | (85:15 Wt. Ratio) | | |

A sample of the solid resin was placed in a crucible and heated at 500°C. in nitrogen for 0.5 hour. The resulting solid was tested for nitrogen adsorption at 77°K using a Micrometrics ASAP 2000 Accelerated Surface Area and Porosimetry System (Micrometrics Instrument Corporation, Norcross, GA). The BET surface area was determined to be 913 m²/g. H-K analysis (Horvath, J. Chem. Eng. Jpn., 1983, Vol. 16, p. 476) of the adsorption data indicated that the solid had a micropore volume of 0.41 cc/g, a narrow pore size distribution, and a median pore size of 0.83 nm.

A sample of the solid silicone resin was also dissolved at 17 Wt.% in toluene and used to spin coat a silicon wafer. The coated silicon wafer was heated in a nitrogen atmosphere at 450°C. for 1 hour. The resulting film had a thickness of 1.2 microns with a thickness variation of 0.9% and a dielectric constant of 1.8.

### Example 7.

Samples 7-1 through 7-4 were prepared by mixing in a glass container components (A), (B), (C) and (F) as described below in the amounts described in Table 6:
(A) tetraethoxysilane,
(B) As indicated in Table 6,
(C) octadecyltrimethoxysilane, and
(F) mixture of methyl isobutyl ketone (MIBK) and toluene (85:15 weight ratio).

To this mixture was added a mixture of (D) water and (E) hydrogen chloride in the amounts described in Table 1. The weight part of component (C) was 1. The mole %'s of (A), (B) and (C) in each sample were 30%, 50% and 20%. The resulting reaction product was stripped of volatiles under reduced pressure at 60 °C. The solubility of the resulting solid silicone resin was tested for MIBK solubility by adding 8.3 g of MIBK to 1.7 g of the solid silicone resin 24 hours after stripping was completed. The solid was considered soluble in the solvent if a clear solution was formed and no particles or gels where visually observed. The MIBK solubility is reported in Table 6.

**Table 6. Characterization of Silicone Resin Compositions**

| Sample | Type of | Wt. Parts | | | | | MIBK |
|---|---|---|---|---|---|---|---|
| No. | (B) | (A) | (B) | (D) | (E) | (F) | Soluble |
| 7-1 | MeSi(OMe)₃ | 0.83 | 0.91 | 0.87 | 0.081 | 14.4 | yes |
| 7-2 | MeSiCl₃ | 0.83 | 1.00 | 0.87 | 0 | 13.5 | yes |
| 7-3 | PrSiCl₃ | 0.83 | 1.18 | 0.87 | 0 | 15.3 | yes |
| 7-4 | PhSiCl₃ | 0.83 | 1.41 | 0.87 | 0 | 17.6 | yes |

Samples 7-1, 7-3, and 7-4 were heated to make porous resins and porosity was determined. A sample of the solid resin was placed in a crucible and heated at 500°C in nitrogen for 0.5 hour. The resulting solid was tested for nitrogen adsorption at 77°K using a Micrometrics ASAP 2000 Accelerated Surface Area and Porosimetry System (Micrometrics Instrument Corporation, Norcross, GA). H-K analysis (Horvath, *J. Chem. Eng. Jpn*., 1983, Vol. 16, p. 476) of the adsorption data was used to determine median pore sizes and micropore volumes. The results are shown in Table 7.

**Table 7. Nitrogen Adsorption Data For Nanoporous Resin Compositions**

| Soluble resin sample no. | BET surface area. m²/g | Micropore volume Cc/g | Median pore diameter nm |
|---|---|---|---|
| 7-1 | 386 | 0.180 | 0.62 |
| 7-3 | 437 | 0.203 | 0.60 |
| 7-4 | 564 | 0.263 | 0.57 |

Samples 7-1, 7-2, and 7-4 were coated on a substrate and physical characteristics of the coating on the substrate determined. A sample of the solid silicone resin was dissolved at 17 Wt.% in MIBK and used to spin coat a silicon wafer. The coated silicon wafer was heated in a nitrogen atmosphere at 450°C for 1 hour. The thin film data is shown in Table 8.

**Table 8. Data For Thin Films**

| Soluble resin sample no. | Film thickness nm | Dielectric constant |
|---|---|---|
| 7-1 | 887 | 1.87 |
| 7-2 | 698 | 1.97 |
| 7-4 | 693 | 2.60 |

## Claims

1. A silicone resin comprising the reaction product obtainable from a mixture comprising (A) 15-70 mol% of a tetraalkoxysilane described by formula Si(OR¹)₄, where each R¹ is an independently selected alkyl group comprising 1 to 6 carbon atoms, (B) 12 to 60 mol% of a hydrosilane described by formula HSiX₃, where each X is an independently selected hydrolyzable group, (C) 15 to 70 mole percent of an organotrialkoxysilane described by formula R²Si(OR³)₃, where R² is a hydrocarbon group comprising 8 to 24 carbon atoms or a substituted hydrocarbon group comprising a hydrocarbon chain having 8 to 24 carbon atoms wherein the substituted hydrocarbon group is substituted with halogen, poly(oxyalkylene) groups described by formula -(O-(CH₂)ₘ)ₓ-CH₃ where m and x are both positive integers and preferably a positive integer of 1 to 6, alkoxy, acyloxy, acyl, alkoxycarbonyl or trialkylsiloxy groups; and each R³ is an independently selected alkyl group comprising 1 to 6 carbon atoms, the mole percentages being based upon the total moles of components (A), (B) and (C); in the presence of (D) water, (E) hydrolysis catalyst, and (F) organic solvent for the reaction product.

2. The silicone resin of claim 1, whereby the reaction product has a weight average molecular weight of 100.000 to 400,000.

3. A method for making a silicone resin comprising forming and reacting a mixture comprising (A) 15-70 mol% of a tetraalkoxysilane described by formula Si(OR¹)₄, where each R¹ is an independently selected alkyl group comprising 1 to 6 carbon atoms, (B) 12 to 60 mol% of a hydrosilane described by formula HSiX₃, where each X is an independently selected hydrolyzable group, (C) 15 to 70 mole percent of an organotrialkoxysilane described by formula R²Si(OR³)₃, where R² is a hydrocarbon group comprising 8 to 24 carbon atoms or a substituted hydrocarbon group comprising a hydrocarbon chain having 8 to 24 carbon atoms wherein the substituted hydrocarbon group is substituted with halogen, poly(oxyalkylene) groups described by formula -(O-(CH₂)ₘ)ₓ-CH₃ where m and x are both positive integers and preferably a positive integer of 1 to 6, alkoxy, acyloxy, acyl, alkoxycarbonyl or trialkylsiloxy groups; and each R³ is an independently selected alkyl group comprising 1 to 6 carbon atoms; in the presence of (D) water, (E) hydrolysis catalyst, and (F) organic solvent for the reaction product.

4. A method according to claim 3 where the mixture comprises 1.4 to 6 moles of water per mole of components (A) + (B) + (C).

5. A method according to claim 3 where the mixture comprises 0.02 to 0.5 mole of the hydrolysis catalyst per mole of components (A) + (B) + (C).

6. A method according to claim 3 where the hydrolysis catalyst is hydrogen chloride.

7. A method according to claim 3 where the mixture comprises 70 to 95 weight percent of the organic solvent for the reaction product.

8. A method according to claim 3 where the reaction product comprising the silicone resin is neutralized and the silicone resin is dissolved in an organic solvent and 0.05 to 0.4 weight percent water is added.

9. A method according to claim 3 where the reaction product comprising the silicone resin in an organic solvent is heated in the presence of an optional condensation catalyst at a temperature sufficient to effect condensation of the silicone resin to a weight average molecular weight of 100,000 to 400,000.

10. A method for making a nanoporous silicone resin coating on a substrate comprising the steps of (a) coating onto a substrate a silicone resin composition comprising the silicone resin of any of claims 1 and 2, and (b) heating the coated substrate at a temperature sufficient to effect curing of the silicone resin and thermolysis of R² groups from silicon atoms thereby forming a nanoporous silicone resin coating on the substrate.

11. A method according to claim 10 where the heating of step (b) is conducted as a two-step process with the coated substrate being heated in a first step at a temperature of from 20°C. to 350°C. and heated in a second step at a temperature of greater than 350°C. to 600°C.

12. A method according to claim 10 where the coated substrate is heated in an inert atmosphere.

13. A method according to claim 11 where the heating in the first step and in the second step is conducted in an inert atmosphere.

14. A method for making a nanoporous silicone resin comprising the step of heating a silicone resin composition comprising the silicone resin of any of claims 1 and 2 at a temperature sufficient to effect cure of the silicone resin and thermolysis of R² groups thereby effecting formation of a nanoporous silicone resin.

15. A substrate coated with a nanoporous silicone resin obtainable by a method of any of claims 10-13.

16. The substrate of claim 15 wherein the nanoporous silicone resin coating has pores less than 20 nm in diameter.

17. The substrate of any of claims 15 and 16 wherein the nanoporous silicone resin coating has a dielectric constant of less than 2.

18. A nanoporous silicone resin obtainable by the method of claim 14.

19. A nanoporous silicone resin of claim 18 having pores less than 20 nm in diameter.

## Patentansprüche

1. Siliconharz, enthaltend das Reaktionsprodukt, erhältlich aus einer Mischung, enthaltend (A) 15 bis 70 Mol-% eines Tetraalkoxysilans, das durch die Formel Si(OR¹)₄ beschrieben ist, worin jedes R¹ eine unabhängig ausgewählte Alkylgruppe mit 1 bis 6 Kohlenstoffatomen ist, (B) 12 bis 60 Mol-% eines Wasserstoffsilans, das durch die Formel HSiX₃ beschrieben ist, worin jedes X eine unabhängig ausgewählte hydrolysierbare Gruppe ist, (C) 15 bis 70 Mol-% eines Organotrialkoxysilans, das durch die Formel R²Si(OR³)₃ beschrieben ist, worin R² eine Kohlenwasserstoffgruppe mit 8 to 24 Kohlenstoffatomen oder eine substituierte Kohlenwasserstoffgruppe, die eine Kohlenwasserstoffkette mit 8 bis 24 Kohlenstoffatomen enthält, ist, wobei die substituierte Kohlenwasserstoffgruppe mit Halogen, Poly(oxyalkylen)gruppen, die durch die Formel -(O-(CH₂)ₘ)ₓ-CH₃ beschrieben sind, worin m und x beide positive ganze Zahlen sind und vorzugsweise eine positive ganze Zahl von 1 bis 6 sind, Alkoxy-, Acyloxy-, Acyl-, Alkoxycarbonyl- oder Trialkylsiloxygruppen substituiert ist, und jedes R³ eine unabhängig ausgewählte Alkylgruppe mit 1 bis 6 Kohlenstoffatomen ist, wobei die Molprozentangaben sich auf die Gesamtmolzahl der Komponenten (A), (B) und (C) beziehen, in Gegenwart von (D) Wasser, (E) einem Hydrolysekatalysator und (F) einem organischen Lösungsmittel für das Reaktionsprodukt.

2. Siliconharz nach Anspruch 1, wobei das Reaktionsprodukt ein gewichtsmittleres Molekulargewicht von 100.000 bis 400.000 aufweist.

3. Verfahren zur Herstellung eines Siliconharzes, umfassend Ausbilden und Umsetzen einer Mischung, enthaltend (A) 15 bis 70 Mol-% eines Tetraalkoxysilans, das durch die Formel Si(OR¹)₄ beschrieben ist, worin jedes R¹ eine unabhängig ausgewählte Alkylgruppe mit 1 bis 6 Kohlenstoffatomen ist, (B) 12 bis 60 Mol-% eines Wasserstoffsilans, das durch die Formel HSiX₃ beschrieben ist, worin jedes X eine unabhängig ausgewählte hydrolysierbare Gruppe ist, (C) 15 bis 70 Mol-% eines Organotrialkoxysilans, das durch die Formel R²Si(OR³)₃ beschrieben ist, worin R² eine Kohlenwasserstoffgruppe mit 8 to 24 Kohlenstoffatomen oder eine substituierte Kohlenwasserstoffgruppe, die eine Kohlenwasserstoffkette mit 8 bis 24 Kohlenstoffatomen enthält, ist, wobei die substituierte Kohlenwasserstoffgruppe mit Halogen, Poly(oxyalkylen)gruppen, die durch die Formel -(O-(CH₂)ₘ)ₓ-CH₃ beschrieben sind, worin m und x beide positive ganze Zahlen sind und vorzugsweise eine positive ganze Zahl von 1 bis 6 sind, Alkoxy-, Acyloxy-, Acyl-, Alkoxycarbonyl- oder Trialkylsiloxygruppen substituiert ist, und jedes R³ eine unabhängig ausgewählte Alkylgruppe mit 1 bis 6 Kohlenstoffatomen ist, in Gegenwart von (D) Wasser, (E) einem Hydrolysekatalysator und (F) einem organischen Lösungsmittel für das Reaktionsprodukt.

4. Verfahren nach Anspruch 3, wobei die Mischung 1,4 bis 6 mol Wasser pro mol der Komponenten (A) + (B) + (C) enthält.

5. Verfahren nach Anspruch 3, wobei die Mischung 0,02 bis 0,5 mol des Hydrolysekatalysators pro mol der Komponenten (A) + (B) + (C) enthält.

6. Verfahren nach Anspruch 3, wobei der Hydrolysekatalysator Chlorwasserstoff ist.

7. Verfahren nach Anspruch 3, wobei die Mischung 70 bis 95 Gew.-% des organischen Lösungsmittels für das Reaktionsprodukt enthält.

8. Verfahren nach Anspruch 3, wobei das Reaktionsprodukt, das das Siliconharz enthält, neutralisiert wird und das Siliconharz in einem organischen Lösungsmittel gelöst wird und 0,05 bis 0,4 Gew.-% Wasser zugegeben werden.

9. Verfahren nach Anspruch 3, wobei das Reaktionsprodukt, das das Siliconharz in einem organischen Lösungsmittel enthält, in Gegenwart eines optionalen Kondensationskatalysators bei einer Temperatur erwärmt wird, die ausreichend ist, um die Kondensation des Siliconharzes bis zu einem gewichtsmittleren Molekulargewicht von 100.000 bis 400.000 zu bewirken.

10. Verfahren zur Herstellung einer nanoporösen Siliconharzbeschichtung auf einem Substrat, umfassend die Schritte des (a) Beschichtens einer Siliconharzzusammensetzung, enthaltend das Siliconharz nach einem der Ansprüche 1 und 2, auf ein Substrat und (b) Erwärmens des beschichteten Substrats auf eine Temperatur, die ausreichend ist, um die Härtung des Siliconharzes und die Thermolyse von R²-Gruppen von Siliciumatomen zu bewirken, um **dadurch** eine nanoporöse Siliconharzbeschichtung auf dem Substrat auszubilden.

11. Verfahren nach Anspruch 10, wobei das Erwärmen des Schritts (b) als ein Zweistufenprozess durchgeführt wird, wobei das beschichtete Substrat in einem ersten Schritt auf eine Temperatur von 20°C bis 350°C erwärmt wird und in einem zweiten Schritt auf eine Temperatur von mehr als 350°C bis 600°C erwärmt wird.

12. Verfahren nach Anspruch 10, wobei das beschichtete Substrat in einer Inertatmosphäre erwärmt wird.

13. Verfahren nach Anspruch 11, wobei das Erwärmen in dem ersten Schritt und dem zweiten Schritt in einer Inertatmosphäre durchgeführt wird.

14. Verfahren zur Herstellung eines nanoporösen Siliconharzes, umfassend die Schritte des Erwärmens einer Siliconharzzusammensetzung, die das Siliconharz nach einem der Ansprüche 1 und 2 enthält, auf eine Temperatur, die ausreichend ist, um die Härtung des Siliconharzes und die Thermolyse von R²-Gruppen zu bewirken, um **dadurch** die Bildung eines nanoporösen Siliconharzes zu bewirken.

15. Substrat, beschichtet mit einem nanoporösen Siliconharz, erhältlich durch ein Verfahren nach einem der Ansprüche 10 bis 13.

16. Substrat nach Anspruch 15, wobei die nanoporöse Siliconharzbeschichtung Poren von weniger als 20 nm im Durchmesser aufweist.

17. Substrat nach einem der Ansprüche 15 und 16, wobei die nanoporöse Siliconharzbeschichtung eine Dielektrizitätskonstante von weniger als 2 aufweist.

18. Nanoporöses Siliconharz, erhältlich durch das Verfahren nach Anspruch 14.

19. Nanoporöses Siliconharz nach Anspruch 18, das Poren von weniger als 20 nm im Durchmesser aufweist.

## Revendications

1. Résine de silicone comprenant le produit de la réaction qu'on peut obtenir à partir d'un mélange comprenant (A) 15-70 mol% d'un tétraalcoxysilane décrit par la formule Si(OR¹)₄, où chaque R¹ est un groupe alkyle comprenant 1 à 6 atomes de carbone choisi indépendamment des autres, (B) 12 à 60 mol% d'un hydrosilane décrit par la formule HSiX₃, où chaque X est un groupe hydrolysable choisi indépendamment des autres, (C) 15 à 70 pour cent en mole d'un organotrialcoxysilane décrit par la formule R²Si(OR³)₃, où R² est un groupe hydrocarboné comprenant 8 à 24 atomes de carbone ou un groupe hydrocarboné substitué comprenant une chaîne hydrocarbonée ayant 8 à 24 atomes de carbone dans lequel le groupe hydrocarboné substitué est substitué par un halogène, des groupes poly(oxyalkylène) décrits par la formule -(O-(CH₂)ₘ)ₓ-CH₃ où m et x sont tous deux des nombres entiers positifs et de préférence un nombre entier positif valant 1 à 6, des groupes alcoxy, acyloxy, acyle, alcoxycarbonyle ou trialkylsiloxy ; et chaque R³ est un groupe alkyle comprenant 1 à 6 atomes de carbone choisi indépendamment des autres, les pourcentages en mole étant basés sur le nombre total de moles des composants (A), (B) et (C) ; en présence (D) d'eau, (E) d'un catalyseur d'hydrolyse et (F) d'un solvant organique pour le produit de la réaction.

2. Résine de silicone de la revendication 1, dans laquelle le produit de la réaction a un poids moléculaire moyen en poids de 100 000 à 400 000.

3. Procédé servant à fabriquer une résine de silicone comprenant de former et de faire réagir un mélange comprenant (A) 15-70 mol% d'un tétraalcoxysilane décrit par la formule Si(OR¹)₄, où chaque R¹ est un groupe alkyle comprenant 1 à 6 atomes de carbone choisi indépendamment des autres, (B) 12 à 60 mol% d'un hydrosilane décrit par la formule HSiX₃, où chaque X est un groupe hydrolysable choisi indépendamment des autres, (C) 15 à 70 pour cent en mole d'un organotriaicoxysilane décrit par la formule R²Si(OR³)₃, où R² est un groupe hydrocarboné comprenant 8 à 24 atomes de carbone ou un groupe hydrocarboné substitué comprenant une chaîne hydrocarbonée ayant 8 à 24 atomes de carbone dans lequel le groupe hydrocarboné substitué est substitué par un halogène, des groupes poly(oxyalkylène) décrits par la formule -(O-(CH₂)ₘ)ₓ-CH₃ où m et x sont tous deux des nombres entiers positifs et de préférence un nombre entier positif valant 1 à 6, des groupes alcoxy, acyloxy, acyle, alcoxycarbonyle ou trialkylsiloxy ; et chaque R³ est un groupe alkyle comprenant 1 à 6 atomes de carbone choisi indépendamment des autres ; en présence (D) d'eau, (E) d'un catalyseur d'hydrolyse et (F) d'un solvant organique pour le produit de la réaction.

4. Procédé selon la revendication 3 dans lequel le mélange comprend 1,4 à 6 moles d'eau pour une mole des composants (A) + (B) + (C).

5. Procédé selon la revendication 3 dans lequel le mélange comprend 0,02 à 0,5 mole du catalyseur d'hydrolyse pour une mole des composants (A) + (B) + (C).

6. Procédé selon la revendication 3 dans lequel le catalyseur d'hydrolyse est le chlorure d'hydrogène.

7. Procédé selon la revendication 3 dans lequel le mélange comprend 70 à 95 pour cent en poids du solvant organique pour le produit de la réaction.

8. Procédé selon la revendication 3 dans lequel le produit de la réaction comprenant la résine de silicone est neutralisé et la résine de silicone est dissoute dans un solvant organique et on ajoute 0,05 à 0,4 pour cent en poids d'eau.

9. Procédé selon la revendication 3 dans lequel le produit de la réaction comprenant la résine de silicone dans un solvant organique est chauffé en présence d'un catalyseur de condensation facultatif à une température suffisante pour effectuer la condensation de la résine de silicone à un poids moléculaire moyen en poids de 100 000 à 400 000.

10. Procédé servant à fabriquer un revêtement de résine de silicone nanoporeuse sur un substrat comprenant les étapes consistant à (a) enduire sur un substrat une composition de résine de silicone comprenant la résine de silicone de l'une quelconque des revendications 1 et 2 et (b) chauffer le substrat enduit à une température suffisante pour effectuer le durcissement de la résine de silicone et la thermolyse des groupes R² les séparant des atomes de silicium formant de cette manière un revêtement de résine de silicone nanoporeuse sur le substrat.

11. Procédé selon la revendication 10 dans lequel le chauffage de l'étape (b) est mis en oeuvre sous forme d'un procédé en deux étapes, le substrat enduit étant chauffé dans une première étape à une température allant 20°C à 350°C et chauffé dans une seconde étape à une température allant d'une température supérieure à 350°C à 600°C.

12. Procédé selon la revendication 10 dans lequel le substrat enduit est chauffé dans une atmosphère inerte.

13. Procédé selon la revendication 11 dans lequel le chauffage dans la première étape et dans la seconde étape est mis en oeuvre dans une atmosphère inerte.

14. Procédé servant à fabriquer une résine de silicone nanoporeuse comprenant l'étape consistant à chauffer une composition de résine de silicone comprenant la résine de silicone de l'une quelconque des revendications 1 et 2 à une température suffisante pour effectuer le durcissement de la résine de silicone et la thermolyse des groupes R² effectuant de cette manière la formation d'une résine de silicone nanoporeuse.

15. Substrat enduit d'une résine de silicone nanoporeuse qu'on peut obtenir au moyen d'un procédé de l'une quelconque des revendications 10-13.

16. Substrat de la revendication 15 dans lequel le revêtement de résine de silicone nanoporeuse a des pores ayant un diamètre inférieur à 20 nm.

17. Substrat de l'une quelconque des revendications 15 et 16 dans lequel le revêtement de résine de silicone nanoporeuse a une constante diélectrique inférieure à 2.

18. Résine de silicone nanoporeuse qu'on peut obtenir au moyen du procédé de la revendication 14.

19. Résine de silicone nanoporeuse de la revendication 18 ayant des pores ayant un diamètre inférieur à 20 nm.
